# NEUE EUROPÄISCHE PATENTSCHRIFT

(11) **EP 1 713 665 B2**
(45) Veröffentlichungstag und Bekanntmachung des Hinweises auf die Entscheidung über den Einspruch: **06.09.2023**
(45) Hinweis auf die Patenterteilung: 08.10.2008
(21) Anmeldenummer: 06705817.2
(22) Anmeldetag: 16.01.2006
(51) Int. Cl.: B60R 21/20, B60Q 5/00

(54) **GENERATORTRÄGER FÜR EIN FAHRERAIRBAGMODUL ZUM EINBAUEN IN EIN LENKRAD EINES KRAFTFAHRZEUGES**
GENERATOR SUPPORT FOR A DRIVER AIR BAG MODULE TO BE MOUNTED IN THE STEERING WHEEL OF A MOTOR VEHICLE
SUPPORT DE GENERATEUR POUR MODULE DE SAC GONFLABLE A MONTER DANS LE VOLANT D'UN VEHICULE

(30) Priorität: 18.01.2005 DE 102005002945
(43) Veröffentlichungstag der Anmeldung: 25.10.2006
(73) Patentinhaber: Joyson Safety Systems Germany GmbH, 63743 Aschaffenburg (DE)
(72) Erfinder: WEIGAND, Steffen, 63743 Aschaffenburg (DE); MÜLLER, Norbert, 63743 Aschaffenburg (DE)
(74) Vertreter: Maikowski & Ninnemann Patentanwälte Partnerschaft mbB
(86) Internationale Anmeldenummer: PCT/DE2006/000079
(87) Internationale Veröffentlichungsnummer: WO 2006/076897

(56) Entgegenhaltungen:
- DE-T3- 69 611 566
- US-A1- 2002 140 212
- US-B1- 6 402 193
- PATENT ABSTRACTS OF JAPAN Bd. 1995, Nr. 02, 31. März 1995 (1995-03-31) & JP 06 312643 A (TOKAI RIKA CO LTD), 8. November 1994 (1994-11-08)

## Beschreibung

Die Erfindung betrifft einen Generatorträger für ein Fahrerairbagmodul zum Einbauen in ein Lenkrad eines Kraftfahrzeuges nach dem Oberbegriff des Anspruchs 1 sowie ein Fahrerairbagmodul.

Es ist bekannt, in Lenkräder von Kraftfahrzeugen ein so genanntes Fahrerairbagmodul zu integrieren, das als einzelne Baueinheit in das Lenkrad eingebaut wird und eine Vielzahl einzelner Bauelemente und mehrere Funktionen umfasst. Die Hauptfunktion eines solchen Fahrerairbagmoduls ist es, im Crash-Fall einen mit Gas gefüllten Airbag zwischen einem Fahrer des Kraftfahrzeuges und dem Lenkrad bereitzustellen.

Dafür weist das Fahrerairbagmodul einen Gasgenerator sowie einen Luftsack auf, der im Crash-Fall durch den Gasgenerator mit Gas gefüllt wird. Zur Stabilisation und zur Befestigung des Gasgenerators dient ein Generatorträger, der mindestens einen Befestigungsbereich aufweist, an dem der Gasgenerator an dem Generatorträger z. B. mittels Schraubverbindung befestigt wird.

Aus der DE 696 11 566 T4 ist es bekannt, zwei Hupenkontakte in das Fahrerairbagmodul zu integrieren, die bei Druckausübung auf das Lenkrad in Richtung Lenksäule in elektrischen Kontakt miteinander gebracht werden und dadurch ein akustisches Hupsignal auslösen. Lässt der Druck auf das Lenkrad nach, so bewegen sich die Hupenkontakte aus dieser Kontaktstellung heraus in eine Normalstellung, in der zwischen den Hupenkontakten kein elektrischer Kontakt vorliegt. Dafür ist ein Federmechanismus vorgesehen. Die Hupenkontakte sind an dem Generatorträger des Fahrerairbagmoduls angeordnet und werden auf diesem durch die Betätigung der Hupe aufeinandergedrückt.

Weiterhin ist aus der US 6 402 193 B1 ein Generatorträger bekannt, der die Merkmale der Oberbegriffe der unabhängigen Ansprüche 1 und 21 aufweist.

Aufgabe der vorliegenden Erfindung ist es, einen Generatorträger für ein Fahrerairbagmodul zu verbessern, wobei sich der Generatorträger insbesondere durch ein erhöhtes Integrationsmaß auszeichnen soll.

Diese Aufgabe wird erfindungsgemäß durch einen Generatorträger mit den Merkmalen des Anspruchs 1 gelöst.

Einer der mindestens zwei Hupenkontakte, die der Generatorträger aufweist, ist im Einbauzustand des Generatorträgers elektrisch geerdet. Dabei bedeutet Einbauzustand, dass der Generatorträger in ein Fahrerairbagmodul eingebaut ist und dieses Fahrerairbagmodul in das Lenkrad eines Kraftfahrzeuges eingebaut ist, so dass der Hupenkontakt über ein Bauteil des Kraftfahrzeuges geerdet ist bzw. auf elektrischer Masse liegt. Der Befestigungsbereich des Generatorträgers ist so ausgebildet und relativ zu dem geerdeten Hupenkontakt so positioniert, dass beim bestimmungsgemäßen Befestigen des Gasgenerators am Befestigungsbereich des Generatorträgers eine elektrische Kontaktierung zwischen dem geerdeten Hupenkontakt und dem Gasgenerator hergestellt wird. Der Gasgenerator wird also über den geerdeten Hupenkontakt geerdet. Der Hupenkontakt wird als "geerdet" bezeichnet, auch wenn er nur im Einbauzustand selber tatsächlich elektrisch geerdet ist.

Ein solcher Generatorträger hat den Vorteil, eine Erdung für den Gasgenerator bereit zu stellen, die sich durch ein hohes Integrationsmaß auszeichnet. Es werden keine extra Verkabelungen des Gasgenerators benötigt, was die Anzahl der benötigten Bauelemente reduziert und die Herstellungskosten senkt.

Eine Erdung des Gasgenerators ist sicherheitstechnisch wichtig, da sich der Gasgenerator ansonsten beim Fahren mit dem Kraftfahrzeug statisch aufladen könnte, was unter Umständen die Zündung eines Zündmechanismus für den Gasgenerator auslösen könnte und somit ein unbeabsichtigtes Aufblasen des Airbags während der Fahrt verursachen würde.

In einer bevorzugten Ausführungsform ist zur Befestigung des Gasgenerators am Befestigungsbereich des Generatorträgers ein elektrisch leitendes Befestigungsmittel vorgesehen. Im Einbauzustand ist das Befestigungsmittel elektrisch leitend mit dem geerdeten Hupenkontakt verbunden. Zum Beispiel kann das Befestigungsmittel als Schraube, als Flansch des Generators oder als Rasthaken ausgebildet sein. Damit erfolgt die Erdung und Kontaktierung des geerdeten Hupenkontaktes quasi indirekt über das Befestigungsmittel.

Der geerdete Hupenkontakt weist bevorzugt eine Verdickung und/oder Verbreiterung auf, auf die im Einbauzustand ein mechanischer Druck des Gasgenerators oder des Befestigungsmittels wirkt. Dabei wird ein elektrischer Kontakt zwischen dem Gasgenerator und dem geerdeten Hupenkontakt hergestellt. Die Verbreiterung bzw. Verdickung vergrößert die Kontaktstelle zwischen dem Gasgenerator und dem geerdeten Hupenkontakt, was die Kontaktierung verbessert.

Dabei weist der Befestigungsbereich in einer besonders bevorzugten Ausführungsform eine Öffnung auf, die im Einbauzustand vom Befestigungsmittel durchdrungen wird. Die Öffnung ist dabei im Generatorträger ausgebildet, so dass das Befestigungsmittel im Einbauzustand die Öffnung bis zu der Seite des Generatorträgers durchgreift, die dem Gasgenerator gegenüberliegt. Dadurch wird einerseits eine mechanisch besonders günstige Befestigungsmöglichkeit bereit gestellt, zum anderen ermöglicht, dass die Erdung des Gasgenerators an dem Hupenkontakt erfolgt, der auf der dem Gasgenerator gegenüber liegenden Seite des Generatorträgers angeordnet ist.

Dabei ist als bevorzugtes Befestigungsmittel eine Schraube mit einer Mutter vorgesehen. Der geerdete Hupenkontakt ist so nahe benachbart zur Öffnung des Befestigungsbereiches positioniert, dass im Einbauzustand ein elektrischer Kontakt zwischen der Mutter des Befestigungsmittels und dem geerdeten Hupenkontakt besteht. Der Hupenkontakt wird dabei z. B. von der Mutter gegen den Generatorträger gepresst, wodurch ein mechanischer Druck von der Mutter auf den Hupenkontakt ausgeübt wird, der eine störungsfreie elektrische Kontaktierung bewirkt.

Bevorzugt ist der Generatorträger als elektrischer Isolator ausgebildet, z. B. aus Kunststoff. Dadurch wird verhindert, dass die Hupenkontakte des Generatorträgers bei Kontakt mit dem Generatorträger unerwünscht mit anderen Bauteilen elektrisch verbunden werden, wie beispielsweise miteinander. In dieser Ausführungsform können die Hupenkontakte auf einander gegenüber liegenden Seiten des Generatorträgers angeordnet sein und dabei den Generatorträger kontaktieren. Der Generatorträger dient dabei auch als Träger der Hupenkontakte. In dieser Ausführungsform ist eine Kunststoffumspritzung der Hupenkontakte nicht notwendig, da keine Gefahr einer unbeabsichtigten gegenseitigen Kontaktierung besteht, da die Hupenkontakte durch den Generatorträger voneinander getrennt sind. Dadurch werden Herstellungskosten des Generatorträgers gesenkt.

Bevorzugt sind die Hupenkontakte als elektrisch leitfähige Kontaktbleche ausgebildet, die beim Hupvorgang elastisch deformiert und aufeinander gedrückt werden. Die Hupenkontakte können dabei flächig ausgebildet sein oder nur teilweise aus streifenförmigen Blechen zusammengesetzt sein. Dabei sind die Kontaktbleche vorteilhaft im Wesentlichen in Form eines U-förmigen Rahmens aus Kontaktblechstreifen ausgebildet. Die U-Form erlaubt ein vereinfachtes Einsetzen des Kontaktblechs in den Generatorträger mit der offenen U-Seite voran. Der zentrale freie Bereich des Rahmens verhindert, dass eine Einströmöffnung des Generatorträgers für vom Gasgenerator in den Airbag einströmendes Gas vom Kontaktblech bedeckt wird.

Erfindungsgemäß ist einer der Hupenkontakte zumindest teilweise durch eine Druckausübung zur Auslösung des Hupsignals elastisch so verformbar, dass er den anderen Hupenkontakt elektrisch kontaktiert. Die Hupenkontakte, die in der Normalstellung beabstandet voneinander angeordnet sind, lösen durch den elektrischen Kontakt miteinander ein Hupsignal aus. Es wird also z. B. ein Teil eines ersten Hupenkontaktes an einen anderen Hupenkontakt gebogen, beispielsweise an einem über den Generatorträger seitlich hervorstehenden Bereich des Hupenkontaktes oder durch eine spezielle Öffnung des Generatorträgers hindurch. Die Elastizität der Verformung sorgt dafür, dass sich die Hupenkontakte beim Nachlassen der Druckausübung wieder automatisch in die kontaktfreie Normalstellung bewegen.

Bevorzugt ist es vorgesehen, dass ein Vorsprung des Lenkradskeletts des Lenkrades, in das das Fahrerairbagmodul mit dem Generatorträger eingesetzt werden soll, einen Vorsprung aufweist. Dieser Vorsprung verursacht bei Druckausübung zur Auslösung des Hupsignals die elastische Verformung des Hupenkontaktes, indem der Vorsprung auf den Hupenkontakt drückt. Dies kann z.B. dadurch geschehen, dass das Fahrerairbagmodul mitsamt dem Generatorträger auf den Vorsprung des Lenkradskelettes gedrückt wird oder mittels eines Betätigungshebel der Vorsprung auf den elastisch verformbaren Hupenkontakt.

Vorteilhaft ist für den geerdeten Hupenkontakt in der Einbaustellung ein Kabel oder ein elektrischer Kontaktbereich vorgesehen, durch den das Lenkradskelett elektrisch kontaktiert wird, wodurch der Hupenkontakt elektrisch geerdet wird. Dies ist eine besonders einfache Methode, um eine Erdung für den geerdeten Hupenkontakt bereitzustellen.

In einer bevorzugten Ausführungsform sind die Hupenkontakte kraft- und/oder formschlüssig am Generatorträger befestigt. Zur Befestigung dienen beispielsweise ultraschallverschweißte Domen oder Schrauben. Dadurch werden die Hupenkontakte in ihrer Normalstellung fixiert und positioniert.

Weiterhin wird die erfindungsgemäße Aufgabe auch von einem Fahrerairbagmodul gelöst, dass einen erfindungsgemäßen Generatorträger aufweist.

Die Erfindung wird nachfolgend an in den Figuren dargestellten Ausführungsbeispielen näher erläutert. Es zeigt:
- Figur 1: in einer Explosionsdarstellung einen Generatorträger mit zwei Hupenkontakten;
- Figuren 2a-2d: die Montage eines Hupenkontaktes auf der Seite eines Generatorträgers, die im Einbauzustand einem Fahrer des Kraftfahrzeuges zugewandt ist;
- Figuren 3a, 3b: die Montage eines weiteren Hupenkontaktes auf dem Generatorträger der Figuren 2 auf der Seite, die dem Fahrer abgewandt ist;
- Figuren 4a-4c: die Auslösung eines Hupsignals durch Kontaktierung der beiden Hupenkontakte; und
- Figuren 5a, 5b: die Erdung eines Generators durch elektrische Kontaktierung eines geerdeten Hupenkontaktes mittels eines leitenden Befestigungsmittels.

In den Figuren haben einander entsprechende und ähnliche Merkmale die gleichen Bezugszeichen.

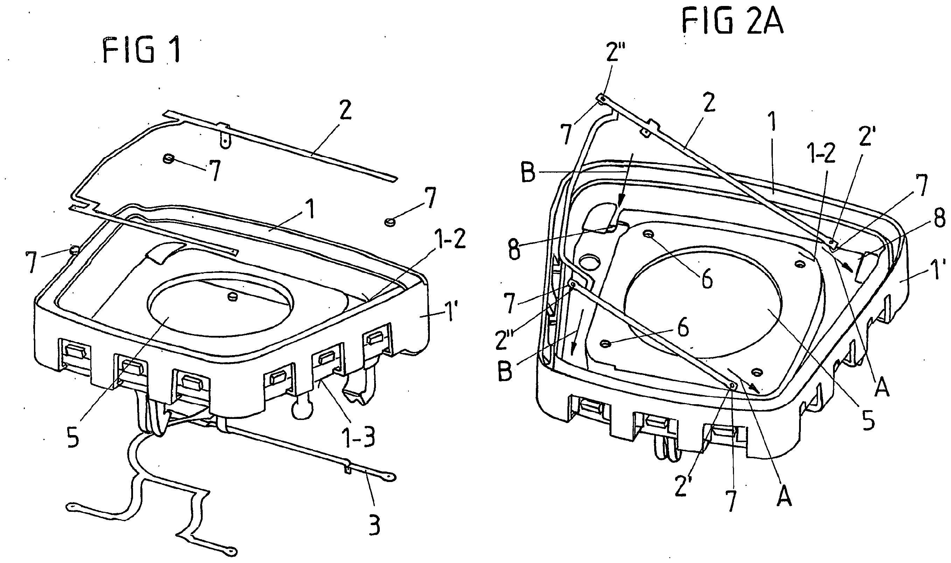

Figur 1 zeigt die Explosionsdarstellung einer Ausführungsform eines erfindungsgemäßen Generatorträgers 1, sowie zwei Hupenkontakte 2 und 3.

Der Generatorträger 1 ist im Wesentlichen flächig ausgebildet und besitzt eine viereckige Grundform mit abgerundeten Ecken. Im Zentrum des flächigen Generatorträgers 1 weist er eine kreisförmige Öffnung 5 in Form einer Aussparung auf. Die Öffnung 5 dient dazu, im Crash-Fall Gas aus dem nicht dargestellten und vom Generatorträger 1 getragenen Gasgenerator in den nicht dargestellten Gassack bzw. Airbag strömen zu lassen.

Der Generatorträger 1 ist dazu vorgesehen, als Bestandteil eines Fahrerairbagmoduls in ein Lenkrad eines Kraftfahrzeuges eingesetzt zu werden. Dabei wird der Generatorträger 1 im Wesentlichen parallel zu der Ebene ausgerichtet, die von den Speichen des Lenkrades gebildet wird und weist somit eine dem Fahrer zugewandte Seite 1-2 und eine dem Fahrer abgewandte Seite 1-3 auf. In der Einbauposition ist die dem Fahrer zugewandte Seite 1-2 relativ zum Fahrzeugboden höher angeordnet als die dem Fahrer abgewandte Seite 1-3, weswegen man auch von oberer und unterer Generatorseite 1-2 bzw. 1-3 spricht. Zwischen dem Generatorträger 1 und dem Fahrer ist im Lenkrad das Fahrerairbagmodul angeordnet, das von dem Generatorträger 1 begrenzt wird. Von daher wird die dem Fahrer zugewandte Seite 1-2 auch innere Seite des Generatorträgers 1 genannt, während die dem Fahrer abgewandte Seite 1-3 auch äußere Seite des Generatorträgers 1 genannt wird.

Analog dazu spricht man beim ersten Hupenkontakt 2 auch vom inneren Hupenkontakt, da er an der dem Fahrer zugewandten Seite 1-2 des Generatorträgers 1 angeordnet ist, während der äußere Hupenkontakt 3 auf der gegenüber liegenden Seite 1-3 des Generatorträgers angeordnet ist.

Der innere Hupenkontakt 2 und der äußere Hupenkontakt 3 sind als Kontaktbleche ausgebildet, die aus streifenförmigen Flächen bestehen und die Form eines U-förmigen Rahmens aufweisen. Die Hupenkontakte 2 und 3 sind im Einbauzustand des Generatorträgers 1 im Kraftfahrzeug Teil eines elektrischen Stromkreises, an den auch eine Hupe zum Auslösen eines akustischen Hupsignals angeschlossen ist.

Der Generatorträger 1 weist entlang seines im Wesentlichen viereckigen Umfanges einen gegenüber dem übrigen Generatorträger verbreiterten Rahmen 1' auf, der den flächigen Generatorträger nach allen Seiten hin mauerartig begrenzt. Die Ausmaße der Hupenkontakte 2 und 3 sind so dimensioniert, dass sie auf dem Generatorträger 1 innerhalb des Rahmens 1' angeordnet werden können.

Weiterhin sind kugelförmige Abstandshalter 7 dazu vorgesehen, durch ihre Positionierung auf dem Generatorträger 1 und ihre Isolatoreigenschaft eine unerwünschte Kontaktierung der Hupenkontakte zu verhindern.

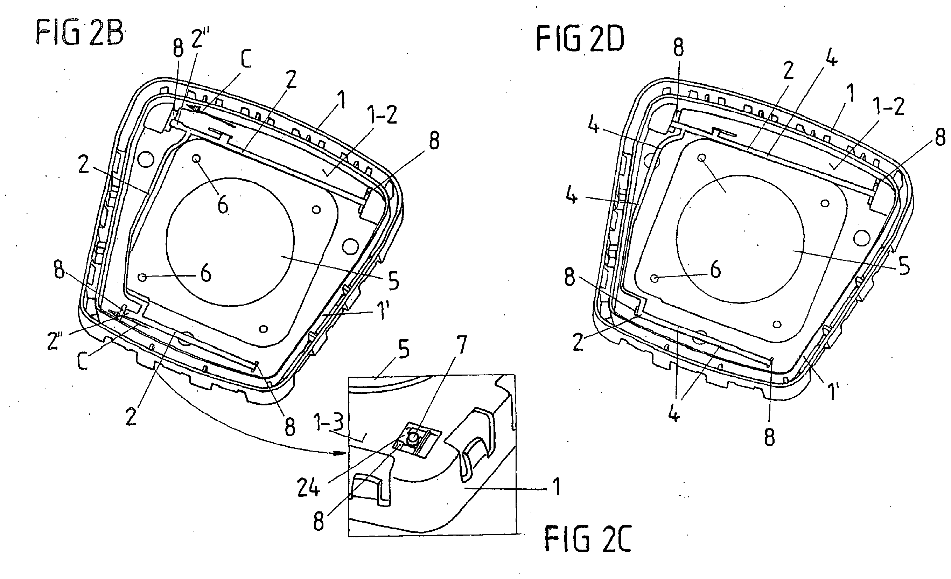

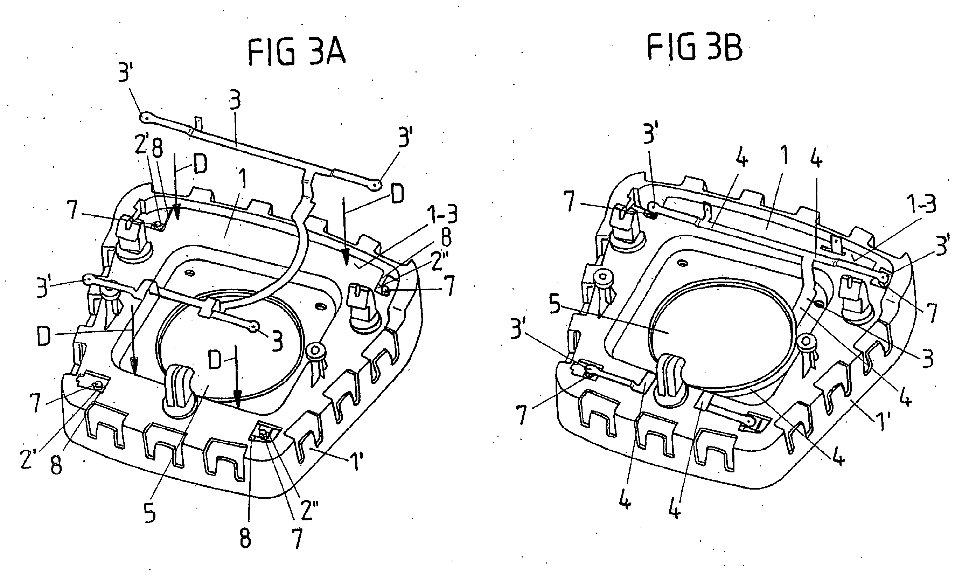

Das Befestigen und Positionieren der Hupenkontakte 2 und 3 zeigen die Figuren 2 und 3. Zunächst werden die Abstandhalter 7 an den vier äußersten Ausdehnungspunkten, den Ecken 2' und 2" des U-förmigen inneren Hupenkontaktes 2 befestigt. Der innere Hupenkontakt 2 wird entlang der Pfeile A in schlitzförmige Aussparungen (Schlitze 8) des Generatorträgers 1 gesteckt, und zwar mit den Ecken 2' voran, die sich am offenen Ende des U-förmigen Rahmens des Hupenkontaktes 2 befinden. Sind die beiden Ecken 2' in die Aussparungen des Generatorträgerrahmens 1 eingeführt, so wird auch das am "Bauch" des U-förmigen Rahmens befindliche Ende des Hupenkontaktes 2 entlang der Pfeile B auf den Generatorträger 1 aufgebracht (vgl. Figur 2a).

Die Aussparungen zur Aufnahme der vier an den Ecken des U-förmigen Rahmens des Hupenkontaktes 2 befindlichen Ecken 2' und 2" sind als Schlitze 8 ausgebildet, die den inneren Hupenkontakt 2 in einer senkrecht zu ihrem Schlitz und parallel zur Fläche des Generatorträgers 1 angeordneten Positionierung aufnehmen. Dabei werden die Ecken 2' und 2" des inneren Hupenkontaktes 2 durch die Schlitze 8 auf die gegenüberliegende äußere Seite 1-3 des Generatorträgers 1 geschoben, wobei sich allerdings immer noch der Großteil des Hupenkontaktes 2 (nämlich alles bis auf seine Ecken 2' und 2") auf der inneren Seite 1-2 des Generatorträgers 1 befindet.

Die Figur 2b zeigt, wie die am U-Bauch befindlichen Ecken 2" des inneren Hupenkontaktes 2 entlang der Pfeile C in die Schlitze 8 geschoben werden, bis sie dort einrasten und eine Rastverbindung eingehen. Diese Position ist in Figur 2c gezeigt, die einen Ausschnitt einer schematischen Darstellung der äußeren Seite 1-3 des Generatorträgers 1 zeigt, an der die Ecken 2" des inneren Hupenkontaktes 2 in einer Vertiefung des Schlitzes 8 angeordnet sind.

Durch das Einrasten wird der Hupenkontakt 2 in der in Figur 2d gezeigten Position fixiert, so dass die Ecken 2' und 2" des inneren Hupenkontaktes 2 insbesondere nicht mehr parallel zum Generatorträger 1 aus den Schlitzen 8 rutschen können. Der innere Hupenkontakt 2 befindet sich nun innerhalb des Rahmens 1' und umgibt die Öffnung 5 entlang dreier Seiten des Rahmens 1'. Da alle vier Ecken 2' und 2" in bzw. unter die Schlitze 8 gesteckt sind, kann der Generatorträger 1 in diesem Montagestadium beliebig gedreht, umgedreht oder gewendet werden, ohne dass der innere Hupenkontakt 2 sich vom Generatorträger 1 löst. Dies erleichtert die Befestigung des äußeren Hupenkontaktes 3.

Das Befestigen und Positionieren des äußeren Hupenkontaktes 3 zeigt die Figur 3a. Der äußere Hupenkontakt 3 wird zunächst parallel zur äußeren Seite 1-3 des Generatorträgers 1 ausgerichtet und entlang der Pfeile D auf die äußere Seite 1-3 zubewegt bis er auf der äußeren Seite 1-3 aufliegt. Dabei werden die vier Ecken 3' des U-förmigen äußeren Hupenkontaktes 3 so auf der äußeren Seite 1-3 des Generatorträgers 1 positioniert, dass sie von den Ecken 2' und 2" des inneren Hupenkontaktes 2 nur durch die Abstandshalter 7 getrennt werden. Die Hupenkontakte 2 und 3 sind somit an gegenüber liegenden Seiten des Generatorträgers 1 parallel zueinander und beabstandet voneinander angeordnet.

Die Figuren 2d und 3b zeigen entlang der Hupenkontakte 2, 3 verteilte Schweißpunkte 4 als die Positionen an, an denen die Hupenkontakte 2 und 3 mittels Domen ultraschallverschweißt und somit an dem Generatorträger 1 befestigt werden. Alternativ können die Hupenkontakte 2 und 3 auch mit Schrauben am Generatorträger 1 befestigt werden. Nach dem Verschweißen sind die Hupenkontakte 2 und 3 so in ihrer Position fixiert, dass die Abstandshalter 7 entfernt werden können, ohne dass die Hupenkontakte 2 und 3 einander berühren würden.

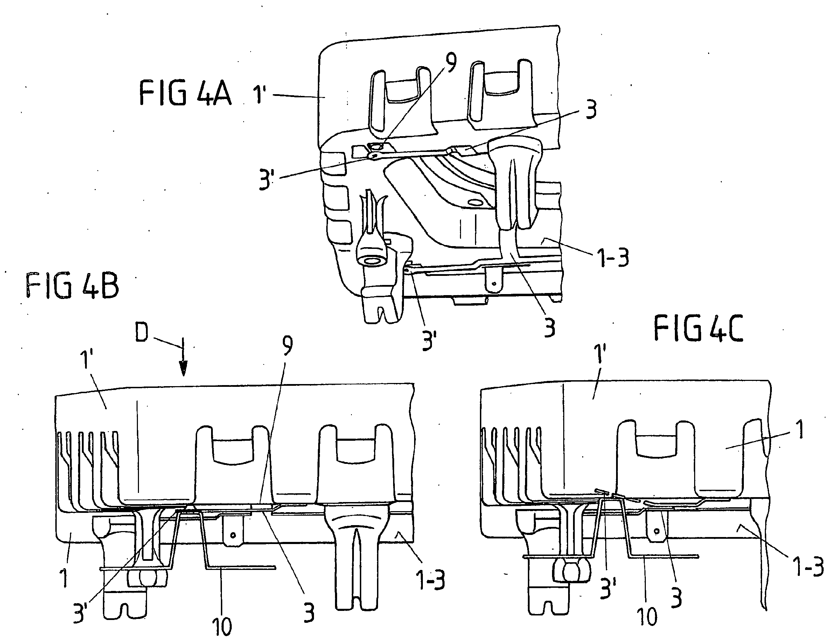

Die Figur 4a zeigt den dabei entstehenden Freiraum 9 zwischen den Ecken 3' und 2' bzw. 2" des äußeren und inneren Hupenkontaktes 3 und 2. Dieser Freiraum 9 verhindert eine elektrische Kontaktierung der Hupenkontakte 2 und 3. Sowohl die Ecken 2' und 2" des inneren Hupenkontaktes 2 als auch die Ecken 3' des äußeren Hupenkontaktes 3 sind auf der gleichen Seite des Generatorträgers 1 angeordnet, der äußeren Seite 1-3. Dabei sind die Ecken 3' des äußeren Hupenkontaktes 3 auf Höhe der äußeren Seite 1-3 angeordnet, die Ecken 2' und 2" des inneren Hupenkontaktes 2 um den Freiraum 9 zur inneren Seite 1-2 hin versetzt.

Befindet sich der Generatorträger 1 in der Einbaustellung, sind die Ecken 3' des äußeren Hupenkontaktes 3 so positioniert, dass sie an Vorsprüngen 10 des Lenkradskeletts anliegen bzw. ihnen nahe benachbart sind (vgl. Figur 4b).

Übt der Fahrer des Kraftfahrzeuges Druck auf die ihm zugewandte Seite des Fahrerairbagmoduls bzw. der ihm zugewandten Seite 1-2 des Generatorträgers 1 aus, so wird der Generatorträger in Richtung der Lenksäule auf das fahrerseitige Ende der Lenksäule gedrückt. Dabei bewegen sich die Vorsprünge 10 auf die äußeren Ecken 3' des äußeren Hupenkontaktes 3 zu und drücken ihn an die äußeren Ecken 2' bzw. 2" des inneren Hupenkontaktes 2, wobei die äußeren Ecken 3' des Hupenkontaktes 3 elastisch verformt werden (vgl. Figur 4c). Durch den elektrischen Kontakt der beiden Hupenkontakte 2 und 3 wird durch einen nicht näher dargestellten Mechanismus ein akustisches Hupsignal ausgelöst. Der Fahrer des Kraftfahrzeuges kann also durch Druck auf vorgegebene Bereiche des Lenkrades in Richtung Lenkradachse die Hupe auslösen.

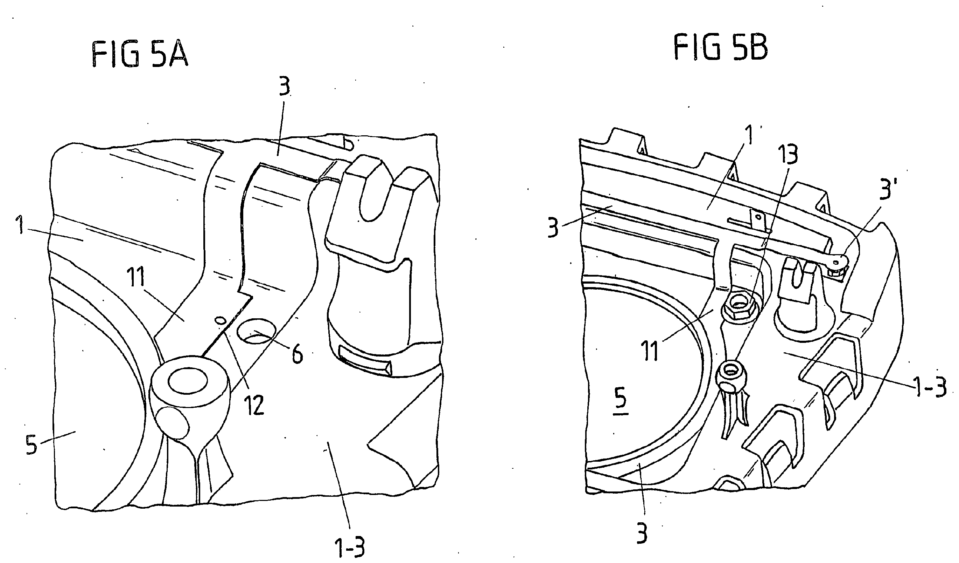

Die Figur 5a zeigt einen Ausschnitt der äußeren Seite 1-3 des Generatorträgers 1 bei bereits montierten Hupenkontakten 2 und 3. Zu sehen ist ein Teil des äußeren Hupenkontaktes 3, der entlang der äußeren Seite 1-3 des Generatorträgers 1 verläuft und eng benachbart zu einem Befestigungsbereich 6 für den Gasgenerator verläuft, der in Form einer kreisförmigen Öffnung ausgebildet ist. Die Öffnung des Befestigungsbereiches 6 hat dabei einen Innendurchmesser, der mit dem Außendurchmesser einer Schraube korrespondiert. An der Stelle des Hupenkontaktes 3, die dem Befestigungsbereich 6 am nächsten benachbart ist, weist das Kontaktblech des Hupenkontaktes 3 eine Verbreiterung 11 sowie eine hügelförmige Verdickung 12 auf.

Zur Befestigung des nicht dargestellten Gasgenerators wird eine Schraube durch die Öffnung des Befestigungsbereiches 6 von der Innenseite 1-2 zur Außenseite 1-3 des Generatorträgers 1 geführt und an der Außenseite 1-3 mit einer Mutter 13 gekontert (vgl.

Figur 5b). Beim Festschrauben der Mutter 13 auf die nicht dargestellte Schraube wird ein mechanischer Druck auf die Verdickung 12 und Verbreiterung 11 des Hupenkontaktes 3 ausgeübt, der diesen an den Generatorträger 1 drückt und zugleich eine elektrische Kontaktierung zwischen dem äußeren Hupenkontakt 3 und der Mutter 13 bereitstellt. Über die Mutter 13 und die nicht dargestellte Schraube als Befestigungsmittel wird auch der Gasgenerator mit dem Kontaktblech des Hupenkontaktes 3 elektrisch verbunden.

Im Einbauzustand wird der äußere Hupenkontakt 3 mittels Drähten oder ähnlichen Kontaktierungsstellen mit dem nicht dargestellten Lenkradskelett elektrisch verbunden und geerdet. Daher wird der äußere Hupenkontakt 3 auch als geerdeter Hupenkontakt 3 bezeichnet. Beim Einbau des Gasgenerators wird also ein elektrischer Kontakt zwischen dem geerdeten Hupenkontakt 3 und dem Gasgenerator bereit gestellt.

In einer alternativen Ausführungsform ist ein Gasgenerator vorgesehen, der an der Außenseite 1-3 des Generatorträgers 1 positioniert werden soll und mittels mindestens eines Generatorflansches als Befestigungsmittel am Befestigungsbereich des Generatorträgers 1 befestigt wird.

Es ist in einer anderen Alternative ebenfalls möglich, nicht vier domenförmige Vorsprünge 10 des Lenkradskelettes vorzusehen, die bei Druckausübung auf den Generatorträger eine elastische Verformung der äußeren Ecken 3' des äußeren Hupenkontaktes 3 verursachen, sondern eine davon abweichende Anzahl Vorsprünge, mindestens aber einen.

### Bezugszeichenliste

- 1: Generatorträger
- 1': Rahmen
- 1-2: innere Generatorträgerseite
- 1-3: äußere Generatorträgerseite
- 2: innerer Hupenkontakt
- 2': Ecke des inneren Hupenkontaktes
- 2": Ecke des inneren Hupenkontaktes
- 3: äußerer, geerdeter Hupenkontakt
- 3': Ecke des äußeren Hupenkontaktes
- 4: Schweißpunkte
- 5: Öffnung
- 6: Befestigungsbereich
- 7: Abstandshalter
- 8: Schlitze
- 9: Freiraum
- 10: Vorsprung des Lenkradskeletts
- 11: Verbreiterung
- 12: Verdickung
- 13: Mutter

## Patentansprüche

1. Generatorträger für ein Fahrerairbagmodul zum Anordnen in einem Lenkrad eines Kraftfahrzeuges mit
- mindestens einem Befestigungsbereich (6) zum Befestigen eines Gasgenerators am Generatorträger (1) und
- mindestens zwei Hupenkontakten (2, 3), die in elektrischen Kontakt miteinander bringbar sind, um in einem Einbauzustand des Generatorträgers (1) zusammen mit dem Fahrerairbagmodul in einem Kraftfahrzeug ein akustisches Hupsignal auszulösen, wobei
- einer der Hupenkontakte (2, 3) dazu vorgesehen ist, im Einbauzustand des Generatorträgers (1) elektrisch geerdet zu sein,
- und wobei ein Hupenkontakt (3) zumindest teilweise durch eine Druckausübung zur Auslösung des Hupsignals so elastisch verformbar ist, dass er den anderen Hupenkontakt (2) elektrisch kontaktiert,
**dadurch gekennzeichnet, dass**
- der Befestigungsbereich (6) so ausgebildet und relativ zu dem geerdeten Hupenkontakt (3) so positioniert ist, dass bei einem bestimmungsgemäßen Befestigen des Gasgenerators am Befestigungsbereich (6) des Generatorträgers (1) eine elektrische Kontaktierung zwischen dem geerdeten Hupenkontakt (3) und dem Gasgenerator hergestellt wird, wobei der Generatorträger (1) als elektrischer Isolator ausgebildet ist.

2. Generatorträger nach Anspruch 1, **dadurch gekennzeichnet, dass** zur Befestigung des Gasgenerators am Befestigungsbereich (6) des Generatorträgers (1) ein elektrisch leitendes Befestigungsmittel vorgesehen ist, das im Einbauzustand elektrisch leitend mit dem geerdeten Hupenkontakt (3) verbunden ist.

3. Generatorträger nach Anspruch 2, **dadurch gekennzeichnet, dass** der geerdeten Hupenkontakt (3) eine Verdickung (12) und/oder Verbreiterung (11) aufweist, auf die im Einbauzustand ein mechanischer Druck des Gasgenerators oder des Befestigungsmittels wirkt, wobei ein elektrischer Kontakt zwischen dem Gasgenerator und dem geerdeten Hupenkontakt (3) hergestellt wird.

4. Generatorträger nach Anspruch 2 oder 3, **dadurch gekennzeichnet, dass** der Befestigungsbereich (6) eine Öffnung aufweist, die vom Befestigungsmittel im Einbauzustand durchdrungen wird.

5. Generatorträger nach Anspruch 4, **dadurch gekennzeichnet, dass** als Befestigungsmittel eine Schraube mit einer Mutter (13) vorgesehen ist.

6. Generatorträger nach Anspruch 5, **dadurch gekennzeichnet, dass** der geerdete Hupenkontakt (3) so nah benachbart zur Öffnung des Befestigungsbereiches (6) positioniert ist, dass im Einbauzustand ein elektrischer Kontakt zwischen der Mutter (13) des Befestigungsmittels und dem geerdeten Hupenkontakt (3) besteht.

7. Generatorträger nach Anspruch 2 oder 3, **dadurch gekennzeichnet, dass** als Befestigungsmittel ein Generatorflansch vorgesehen ist.

8. Generatorträger nach einem der vorangegangenen Ansprüche, **dadurch gekennzeichnet, dass** der Generatorträger (1) als ein elektrischer Isolator aus einem Kunststoff ausgebildet ist.

9. Generatorträger nach einem der vorangegangenen Ansprüche, **dadurch gekennzeichnet, dass** die Hupenkontakte (2, 3) auf einander gegenüberliegenden Seiten des Generatorträgers (1) angeordnet sind.

10. Generatorträger nach einem der vorangegangenen Ansprüche, **dadurch gekennzeichnet, dass** die Hupenkontakte (2, 3) als elektrisch leitfähige Kontaktbleche ausgebildet sind.

11. Generatorträger nach Anspruch 10, **dadurch gekennzeichnet, dass** die Kontaktbleche (2, 3) im Wesentlichen in Form eines U-förmigen Rahmens ausgebildet sind.

12. Generatorträger nach einem der vorangegangenen Ansprüche, **dadurch gekennzeichnet, dass** die Hupenkontakte (2, 3) in der Normalstellung beabstandet voneinander angeordnet sind.

13. Generatorträger nach einem der vorangegangenen Ansprüche, **dadurch gekennzeichnet, dass** ein Vorsprung (10) eines Lenkradskeletts vorgesehen ist, der bei Druckausübung zur Auslösung des Hupsignals die elastische Verformung des Hupenkontaktes (3) verursacht.

14. Generatorträger nach einem der vorangegangenen Ansprüche, **dadurch gekennzeichnet, dass** der geerdete Hupenkontakt (3) ein Kabel oder einen elektrischen Kontaktbereich aufweist, der dazu vorgesehen ist, in der Einbaustellung den geerdeten Hupenkontakt (3) durch eine elektrische Kontaktierung eines Lenkradskeletts elektrisch zu erden.

15. Generatorträger nach einem der vorangegangenen Ansprüche, **dadurch gekennzeichnet, dass** die Hupenkontakte (2, 3) kraft- und/oder formschlüssig mit dem Generator träger verbunden sind.

16. Generatorträger nach Anspruch 15, **dadurch gekennzeichnet, dass** die Hupenkontakte (2, 3) mittels ultraschallverschweißten Domen oder Schrauben am Generatorträger (1) befestigt sind.

17. Generatorträger nach einem der vorangegangenen Ansprüche, **dadurch gekennzeichnet, dass** die Hupenkontakte (2, 3) umspritzungsfrei ausgebildet sind.

18. Generatorträger nach einem der vorangegangenen Ansprüche, **dadurch gekennzeichnet durch** Kontaktierungsmittel, die im Einbauzustand des Generatorträgers (1) eine elektrische Erdung des geerdeten Hupenkontaktes (3) bereitstellen.

19. Fahrerairbagmodul zum Einbauen in ein Lenkrad eines Kraftfahrzeuges mit einem Generatorträger nach einem der vorangegangenen Ansprüche, an dessen Befestigungsbereich ein Gasgenerator befestigt ist.

20. Fahrerairbagmodul nach Anspruch 19, **dadurch gekennzeichnet, dass** die Hupenkontakte im Einbauzustand des Fahrerairbagmoduls im Kraftfahrzeug an einen Stromkreis anschließbar sind, an den auch eine Hupe zum Auslösen des akustischen Hupsignals angeschlossen ist.

21. Verfahren zur Befestigung eines Gasgenerators an einem Generatorträger, wobei
- ein Generatorträger mit mindestens zwei Hupenkontakten (2, 3) verwendet wird, die in elektrischen Kontakt miteinander bringbar sind, um in einem Einbauzustand des Generatorträgers (1) zusammen mit dem Fahrerairbagmodul in einem Kraftfahrzeug ein akustisches Hupsignal auszulösen, und
- einer der mindestens zwei Hupenkontakte (2, 3) geerdet wird,
- wobei ein Hupenkontakt (3) zumindest teilweise durch eine Druckausübung zur Auslösung des Hupsignals so elastisch verformbar ist, dass er den anderen Hupenkontakt (2) elektrisch kontaktiert,
**dadurch gekennzeichnet, dass**
der Gasgenerator so am Generatorträger (1) befestigt wird, dass eine elektrische Kontaktierung zwischen dem geerdeten Hupenkontakt (3) und dem Gasgenerator (1) hergestellt wird, wobei der Generatorträger (1) als ein elektrischer Isolator ausgebildet ist.

## Claims

1. Generator support for a driver airbag module to be arranged in the steering wheel of a motor vehicle, with
- at least one fastening region (6) for fastening a gas generator to the generator support (1), and
- at least two horn contacts (2, 3) which can be brought into electrical contact with each other in order to trigger an acoustic horn signal when the generator support (1) is mounted together with the driver airbag module in a motor vehicle,
- one of the horn contacts (2, 3) being provided for the purpose of being electrically earthed when the generator support (1) is mounted,
- and wherein one horn contact (3) can be at least partially elastically deformed by pressure being exerted to trigger the horn signal, such that it makes electrical contact with the other horn contact (2),
**characterized in that**
- the fastening region (6) is designed in such a manner and is positioned relative to the earthed horn contact (3) in such a manner that, when the gas generator is fastened to the fastening region (6) of the generator support (1) as prescribed, an electric contact connection is produced between the earthed horn contact (3) and the gas generator, with the generator support (1) being designed as an electric insulator.

2. Generator support according to Claim 1, **characterized in that,** in order to fasten the gas generator to the fastening region (6) of the generator support (1), an electrically conductive fastening means is provided which, when mounted, is connected in an electrically conductive manner to the earthed horn contact (3).

3. Generator support according to Claim 2, **characterized in that** the earthed horn contact (3) has a thickened portion (12) and/or widened portion (11) on which, when mounted, a mechanical pressure of the gas generator or of the fastening means acts, with an electric contact being produced between the gas generator and the earthed horn contact (3).

4. Generator support according to Claim 2 or 3, **characterized in that** the fastening region (6) has an opening which, when mounted, is penetrated by the fastening means.

5. Generator support according to Claim 4, **characterized in that** a screw with a nut (13) is provided as the fastening means.

6. Generator support according to Claim 5, **characterized in that** the earthed horn contact (3) is positioned so closely adjacent to the opening of the fastening region (6) that, when mounted, there is an electric contact between the nut (13) of the fastening means and the earthed horn contact (3).

7. Generator support according to Claim 2 or 3, **characterized in that** a generator flange is provided as the fastening means.

8. Generator support according to one of the preceding claims, **characterized in that** the generator support (1) is designed as an electric insulator made of a plastic.

9. Generator support according to one of the preceding claims, **characterized in that** the horn contacts (2, 3) are arranged on mutually opposite sides of the generator support (1).

10. Generator support according to one of the preceding claims, **characterized in that** the horn contacts (2, 3) are designed as electrically conductive contact plates.

11. Generator support according to Claim 10, **characterized in that** the contact plates (2, 3) are designed essentially in the form of a U-shaped frame.

12. Generator support according to one of the preceding claims, **characterized in that,** in the normal position, the horn contacts (2, 3) are arranged at a distance from each other.

13. Generator support according to one of the preceding claims, **characterized in that** a projection (10) of a steering wheel skeleton is provided which, when pressure is exerted to trigger the horn signal, causes the elastic deformation of the horn contact (3).

14. Generator support according to one of the preceding claims, **characterized in that** the earthed horn contact (3) has a cable or an electric contact region which is provided for the purpose of, in the mounted position, electrically earthing the earthed horn contact (3) by means of an electric contact connection of a steering wheel skeleton.

15. Generator support according to one of the preceding claims, **characterized in that** the horn contacts (2, 3) are connected in a frictional and/or form-fitting manner to the generator support.

16. Generator support according to Claim 15, **characterized in that** the horn contacts (2, 3) are fastened to the generator support (1) by means of ultrasonically welded domes or screws.

17. Generator support according to one of the preceding claims, **characterized in that** the horn contacts (2, 3) are designed such that they are free from encapsulation by injection moulding.

18. Generator support according to one of the preceding claims, **characterized by** contact-making means which, when the generator support (1) is mounted, provide an electrical connection to earth of the earthed horn contact (3).

19. Driver airbag module to be mounted in the steering wheel of a motor vehicle, with a generator support according to one of the preceding claims, to the fastening region of which a gas generator is fastened.

20. Driver airbag module according to Claim 19, **characterized in that,** when the driver airbag module is mounted in the motor vehicle, the horn contacts can be connected to an electric circuit to which a horn for triggering the acoustic horn signal is also connected.

21. Method for fastening a gas generator to a generator support, wherein
- use being made of a generator support with at least two horn contacts (2, 3) which can be brought into electric contact with each other in order to trigger an acoustic horn signal when the generator support (1) is mounted together with the driver airbag module in a motor vehicle, and
- one of the at least two horn contacts (2, 3) being earthed,
- wherein one horn contact (3) can be at least partially elastically deformed by pressure being exerted to trigger the horn signal, such that it makes electrical contact with the other horn contact (2),
**characterized in that**
the gas generator is fastened to the generator support (1) in such a manner that an electric contact connection is produced between the earthed horn contact (3) and the gas generator (1), with the generator support (1) being designed as an electric insulator.

## Revendications

1. Support de générateur pour un module de sac gonflable côté conducteur à monter dans le volant d'un véhicule automobile, comportant
- au moins une zone de fixation (6) servant à fixer un générateur de gaz sur le support de générateur (1) et
- au moins deux contacts d'avertisseur (2, 3) qui peuvent être mis en contact électrique l'un avec l'autre, afin de déclencher un signal d'avertisseur sonore lorsque le support de générateur (1) est monté, conjointement avec le module de sac gonflable côté conducteur, dans un véhicule automobile,
- un des contacts d'avertisseur (2, 3) étant prévu pour être mis à la terre électriquement lorsque le support de générateur (1) est monté,
- et un contact d'avertisseur (3) pouvant être déformé élastiquement au moins en partie sous l'effet d'une pression exercée servant à déclencher le signal d'avertisseur de telle manière qu'il établit un contact électrique avec l'autre contact d'avertisseur (2),
**caractérisé en ce que**
- la zone de fixation (6) est conçue et positionnée par rapport au contact d'avertisseur (3) mis à la terre de telle manière qu'un contact électrique est établi entre le contact d'avertisseur (3) mis à la terre et le générateur de gaz lorsque le générateur de gaz est correctement fixé sur la zone de fixation (6) du support de générateur (1), le support de générateur (1) étant conçu comme un isolateur électrique.

2. Support de générateur selon la revendication 1, **caractérisé en ce que** pour fixer le générateur de gaz sur la zone de fixation (6) du support de générateur (1) il est prévu un moyen de fixation électroconducteur qui, à l'état monté, est relié de manière électroconductrice au contact d'avertisseur (3) mis à la terre.

3. Support de générateur selon la revendication 2, **caractérisé en ce que** le contact d'avertisseur (3) mis à la terre présente un épaississement (12) et/ou un élargissement (11) sur lequel agit, à l'état monté, une pression mécanique du générateur de gaz ou du moyen de fixation, un contact électrique étant établi entre le générateur de gaz et le contact d'avertisseur (3) mis à la terre.

4. Support de générateur selon la revendication 2 ou 3, **caractérisé en ce que** la zone de fixation (6) présente une ouverture que traverse le moyen de fixation à l'état monté.

5. Support de générateur selon la revendication 4, **caractérisé en ce qu'**une vis munie d'un écrou (13) est prévue comme moyen de fixation.

6. Support de générateur selon la revendication 5, **caractérisé en ce que** le contact d'avertisseur (3) mis à la terre est positionné à une telle proximité de l'ouverture de la zone de fixation (6) qu'à l'état monté il existe un contact électrique entre l'écrou (13) du moyen de fixation et le contact d'avertisseur (3) mis à la terre.

7. Support de générateur selon la revendication 2 ou 3, **caractérisé en ce qu'**une bride de générateur est prévue comme moyen de fixation.

8. Support de générateur selon l'une quelconque des revendications précédentes, **caractérisé en ce que** le support de générateur (1) est conçu comme un isolateur électrique en matière plastique.

9. Support de générateur selon l'une quelconque des revendications précédentes, **caractérisé en ce que** les contacts d'avertisseur (2, 3) sont disposés sur les côtés du support de générateur (1), lesquels sont situés l'un en face de l'autre.

10. Support de générateur selon l'une quelconque des revendications précédentes, **caractérisé en ce que** les contacts d'avertisseur (2, 3) sont conçus comme des tôles de contact électroconductrices.

11. Support de générateur selon la revendication 10, **caractérisé en ce que** les tôles de contact (2, 3) ont essentiellement la forme d'un cadre en U.

12. Support de générateur selon l'une quelconque des revendications précédentes, **caractérisé en ce que** dans la position normale les contacts d'avertisseur (2, 3) sont distants l'un de l'autre.

13. Support de générateur selon l'une quelconque des revendications précédentes, **caractérisé en ce qu'**il est prévu une saillie (10) d'une ossature de volant, laquelle engendre la déformation élastique du contact d'avertisseur (3) lorsque la pression servant à déclencher le signal d'avertisseur est exercée.

14. Support de générateur selon l'une quelconque des revendications précédentes, **caractérisé en ce que** le contact d'avertisseur (3) mis à la terre comporte un câble ou une zone de contact électrique qui est prévue pour, dans la position montée, mettre à la terre électriquement le contact d'avertisseur (3) mis à la terre par établissement d'un contact électrique avec une ossature de volant.

15. Support de générateur selon l'une quelconque des revendications précédentes, **caractérisé en ce que** les contacts d'avertisseur (2, 3) sont reliés au support de générateur par conjugaison de forme et/ou par adhérence.

16. Support de générateur selon la revendication 15, **caractérisé en ce que** les contacts d'avertisseur (2, 3) sont fixés sur le support de générateur (1) au moyen de dômes ou de vis soudés par ultrasons.

17. Support de générateur selon l'une quelconque des revendications précédentes, **caractérisé en ce que** les contacts d'avertisseur (2, 3) sont conçus sans enrobage par injection.

18. Support de générateur selon l'une quelconque des revendications précédentes, **caractérisé par** des moyens de mise en contact qui réalisent, lorsque le support de générateur (1) est monté, une mise à la terre électrique du contact d'avertisseur (3) mis à la terre.

19. Module de sac gonflable côté conducteur à monter dans le volant d'un véhicule automobile comprenant un support de générateur selon l'une quelconque des revendications précédentes, un générateur de gaz étant fixé sur la zone de fixation dudit support de générateur.

20. Module de sac gonflable côté conducteur selon la revendication 19, **caractérisé en ce que** les contacts d'avertisseur, lorsque le module de sac gonflable côté conducteur est monté dans le véhicule automobile, peuvent être raccordés à un circuit électrique, auquel est également raccordé un avertisseur destiné à déclencher le signal d'avertisseur sonore.

21. Procédé de fixation d'un générateur de gaz sur un support de générateur,
- un support de générateur comportant au moins deux contacts d'avertisseur (2, 3) étant utilisé, lesquels contacts peuvent être mis en contact électrique l'un avec l'autre afin de déclencher un signal d'avertisseur sonore, lorsque le support de générateur (1) est monté, conjointement avec le module de sac gonflable côté conducteur, dans un véhicule automobile, et
- un des au moins deux contacts d'avertisseur (2, 3) étant mis à la terre,
- un contact d'avertisseur (3) pouvant être déformé élastiquement au moins en partie sous l'effet d'une pression exercée servant à déclencher le signal d'avertisseur de telle manière qu'il établit un contact électrique avec l'autre contact d'avertisseur (2),
**caractérisé en ce que**
le générateur de gaz est fixé de telle manière sur le support de générateur (1) qu'un contact électrique est établi entre le contact d'avertisseur (3) mis à la terre et le générateur de gaz (1), le support de générateur (1) étant conçu comme un isolateur électrique.
